# EUROPÄISCHE PATENTANMELDUNG

(11) **EP 1 731 214 A1**
(43) Veröffentlichungstag der Anmeldung: **13.12.2006**
(21) Anmeldenummer: 05012133.4
(22) Anmeldetag: 06.06.2005
(51) Int. Cl.: B01D 63/08, B01D 61/08, B01D 61/18

(54) **Abstandselement zur Führung von Strömungsmedien**

(71) Anmelder: Rochem RO-Wasserbehandlung GmbH, 21077 Hamburg (DE)
(72) Erfinder: Wilhèlm Heine, 21077 Hamburg (DE)
(74) Vertreter: Niedmers, Ole

(57) **Zusammenfassung**

Es wird ein Abstandselement (11) zur Führung von Strömungsmedien (15), insbesondere bei Vorrichtungen (10) zum Filtern und Trennen von Strömungsmedien (15) Umkehrosmose und Ultrafiltration, vorgeschlagen, wobei jeweils zwischen zwei im wesentlichen scheibenförmig ausgebildeten, mit einem zentralen Loch (12) versehenen Abstandselementen (11), die vom Strömungsmedium (15) umflossen werden, ein Filterelement (15) eingeschlossen ist, und wobei das Abstandselement (11) um das zentrale Loch (12) herum mit einer Mehrzahl von zueinander beabstandeten Öffnungen (14) versehen ist, durch die das Strömungsmedium (15) hindurchtritt, und daß auf wenigstens einer Oberfläche (118; 119) des Abstandselementes (11) eine Mehrzahl von erhaben von den Oberflächen (118; 119) wegstehender Vorsprünge vorgesehen ist. Dabei weisen die Vorsprünge (29) eine im wesentlichen parallel zur Oberfläche (118; 119) ausgerichtete Vorsprungoberfläche (290) auf.

## Beschreibung

Die Erfindung betrifft ein Abstandselement zur Führung von Strömungsmedien, insbesondere bei Vorrichtungen zum Filtern und Trennen von Strömungsmedien durch Umkehrosmose und Ultrafiltration, wobei jeweils zwischen zwei im wesentlichen scheibenförmig ausgebildeten, mit einem zentralen Loch versehenen Abstandselementen, die vom Strömungsmedium umflossen werden, ein Filterelement eingeschlossen ist, und wobei das Abstandselement um das zentrale Loch herum mit einer Mehrzahl von zueinander beabstandeten Öffnungen versehen ist, durch die das Strömungsmedium hindurchtritt, und daß auf wenigstens einer Oberfläche des Abstandselementes eine Mehrzahl von erhaben von der Oberfläche wegstehender Vorsprünge vorgesehen ist.

Ein Abstandselement dieser Art ist bekannt (EP-A-0 289 740). Die gattungsgemäßen Abstandselemente werden seit Jahrzehnten in Vorrichtungen zum Filtern und Trennen von Strömungsmedien eingesetzt, insbesondere im Bereich der Meerwasserentsalzung und der Sickerwasseraufbereitung. das bspw. bei Mülldeponien anfällt, aber auch zur Stofftrennung von Flüssigkeitsgemischen, wie sie bspw. in der chemischen Industrie, insbesondere auch in der Erdölchemie, anfallen.

Das Stofftrennprinzip mit derartigen Vorrichtungen, die die Abstandselemente und zwischen den Abstandselementen angeordnete Filterelemente in Form von Membrankissen verwenden, ist der Fachwelt grundsätzlich bekannt und braucht an dieser Stelle deshalb nicht weiter ausgeführt zu werden.

Bei den bekannten Abstandselementen liegen die Membrankissen nicht unmittelbar auf der Oberfläche des Abstandselementes auf, sondern auf einer Mehrzahl von erhaben von den Oberflächen wegstehenden Vorsprüngen, so daß ein Zwischenraum zwischen der Oberfläche des Membrankissens bzw. den Oberflächen des Membrankissens vorgesehen ist, der dazu dient, daß das zu trennende Medium, d.h. das Strömungsmedium, bspw. Meerwasser oder verunreinigtes Sickerwasser, an den Oberflächen des Membrankissens längsströmen kann und der selektive Anteil des Strömungsmediums ungehindert durch die beidseitigen trennaktiven Schichten des Membrankissens hindurch dringen kann und als Permeat im geschlossenen Membrankissen gesammelt und zu einem Auslaß transportiert werden kann, wohingegen das Strömungsmedium beim Durchlaufen der Vorrichtung vom Einlaß zum Auslaß immer stärke aufkonzentriert wird und als Retentart die Vorrichtung verläßt.

Die treibende Kraft für diesen Trennmechanismus ist regelmäßig der primäre Druck des zu trennenden Strömungsmediums, infolge dessen das Strömungsmedium im wesentlichen meanderförmig durch die Vorrichtung hindurchbewegt wird, wobei zwischen dem Eingangsdruck des Strömungsmediums und dem Ausgangsdruck des die Vorrichtung verlassenden Retentats ein beträchtlicher Druckabfall auftritt, der umso größer ist, je mehr Filterelemente in der Vorrichtung vorgesehen sind, die alle vom zu trennenden Medium vom Eingang bis zum Ausgang der Vorrichtung überstrichen bzw. umflossen werden müssen.

Je nach Größe der Vorrichtung, der Membranfläche, der Art der Membran sowie des zu trennenden Strömungsmediums und des gewählten Trennmechanismus sind Eingangsdrücke von 50 bis 60 bar, sogar bis zu 120 bis 150 bar durchschnittlich anzutreffende Werte, was eine hohe mechanische Belastung auch der aus polymeren Werkstoffen bestehenden trennaktiven Schichten der Membrankissen zur Folge hat. Zu bedenken ist auch, daß derartige Vorrichtungen regelmäßig in ununterbrochenem Dauerbetrieb betrieben werden, d.h. die mechanische Beanspruchung der Membranelemente ist außerordentlich groß.

Bei den Abstandselementen, die die Membrankissen jeweils zwischen sich aufnehmen, ist angestrebt, daß die Vorsprünge, auf denen die Membrankissen aufliegen, so klein wie möglich sind, was seinen Grund darin hat, daß für das Strömungsmedium die Anströmflächen von Stützelementen, die die Strömung hindern und zur Stofftreffung nichts beitragen, so gering wie möglich gehalten werden, um dadurch bedingt den Druckabfall so gering wie möglich zu halten und zudem keine Flächen bzw. Punkte zu bilden, an denen im Strömungsmedium enthaltene Schwebteile sich festsetzen und anwachsen und größer werden können, bis schließlich eine Verblockung auftritt, und die effektive wirksame Membranfläche der Membrankissen so gering wie möglich einzuschränken bzw. zu vermindern.

Bei dem bekannten Abstandselement sind aus diesen vorangehend aufgeführten Gründen die Vorsprünge im Querschnitt als kleine Hügel ausgebildet, die mit einer runden Kuppel an ihrer höchsten Stelle versehen sind. Aufgrund dieser Ausgestaltung der Vorsprünge liegen die Oberflächen der Membranelemente, d.h. die selektive Schicht der Membrankissen, in einem theoretisch zu null gehenden Flächenbereich auf den Vorsprüngen auf. Damit ist das Ziel prinzipiell erreicht, die selektive Fläche der Membranelemente so groß wie irgend nur möglich zu halten und die strömungs- und somit druckvermindernde Fläche der Vorsprünge so klein wie möglich zu halten.

Es hat sich aber herausgestellt, daß aufgrund der sehr hohen Primärdrücke, mit denen derart ausgerüstete Vorrichtungen betrieben werden, infolge der Strömung des Strömungsmediums längs den Oberflächen der Membranelemente eine geringfügige Bewegung der Membranelemente auch aufgrund der Eigenelastizität des polymeren Werkstoffs, der die Membranelemente bildet, stattfindet. Es findet somit beim Betrieb derartiger Vorrichtungen insbesondere im Bereich der Auflagepunkte der Membrankissen auf den punktförmigen Spitzen der Vorsprünge ein mechanischer Abrieb statt, der bei langem Dauerbetrieb der Vorrichtung nicht nur zu einem Eindrücken der selektiven Schicht des Membrankissens führt, sondern es findet bei langem Dauerbetrieb auch ein punktförmiges Durchdringen der selektiven Schicht des Membrankissens statt, womit die Vorrichtung sofort unbrauchbar wird, da sie ihre bestimmungsgemäße Trennfunktion dann nicht mehr ausführen kann, da sich das zu trennende Strömungsmedium dann punktuell mit dem Permeat vermischt.

Hinzu kommt noch, daß der polymere Werkstoff, der die selektive Schicht des Membrankissens bildet, mit zunehmender Temperatur zunehmend weicher wird und somit bei zunehmender Temperatur des zu trennenden Strömungsmediums sich die Wahrscheinlichkeit erhöht, daß infolge des vorbeschriebenen Reibungsmechanismus zwischen der Oberfläche des Vorsprungs und der selektiven Schicht des Membranelementes ein Durchbohren des Membranelementes stattfindet.

Ein Unbrauchbarwerden der Vorrichtung durch das Durchtrennen der selektiven Schicht der des Membrankissens ist immer dann außerordentlich nachteilig, wenn keine redundante Vorrichtung vorhanden ist, die im Falle einer derartigen Störung den Betrieb übernehmen kann. Vielfach ist aber aus den verschiedensten Gründen das Vorsehen einer renundanten Vorrichtung nicht möglich, wobei hier nur Kosten-, Platz- und Wartungsgründe beispielhaft zu nennen sind.

Es ist somit Aufgabe der vorliegenden Erfindung ein Abstandselement eingangs genannten Art zu schaffen, das unter Beibehaltung der Vorteile des gattungsgemäßen Abstandselementes ein Zerstören der Oberfläche der selektiven Schicht eines Membrankissens auch bei Dauerbetrieb, bei hohem Drücken und bei hohen Temperaturen ausschließt, wobei aber gleichzeitig die konstruktiven Prinzipien der Vorrichtungen, bei denen das Abstandselement eingesetzt werden soll, nicht geändert zu werden brauchen, so daß prinzipiell auch eine Nachrüstung schon bestehender Vorrichtungen mit dem vorzuschlagenden Abstandselement möglich sein soll, wobei das Abstandselement ebenfalls in Einrichtungen gefertigt werden können soll, die sich prinzipiell von Einrichtungen bisheriger Art, die dafür benutzt worden sind, nicht unterscheidet. so daß das Abstandselement einfach und kostengünstig herstellbar und bereitstellbar sein soll.

Gelöst wird die Aufgabe gemäß der Erfindung dadurch, daß die Vorsprünge eine im wesentlichen parallel zur Oberfläche ausgerichtete Vorsprungoberfläche aufweisen.

Die erfindungsgemäße Lösung hat den sehr großen Vorteil gegenüber dem gattungsgemäßen Abstandselement, daß das Membrankissen auf der diesem zugewandten Oberfläche des Vorsprungs, die zwar bestimmungsgemäß klein gehalten wird, aufliegt, aber dennoch flächig aufliegt und nicht, wie in einem infinitesimalen Punkt, wie es bei den Vorsprüngen der bisherigen gattungsgemäßen Abstandselementen der Fall ist.

Gemäß einer vorteilhaften Ausgestaltung des Abstandselements ist die Vorsprungoberfläche im wesentlichen eben ausgebildet, was den sehr positiven Effekt hat, daß sichergestellt ist, das die entsprechend gegenüberliegende Fläche des Membrankissens, die ebenfalls im wesentlichen eben ausgebildet ist, vollflächig auf der Vorsprungoberfläche aufliegt, so daß infolge mechanischer Bewegungen des Membrankissens und infolge thermischer Einflüsse auch bei Dauerbetrieb einer derart ausgerüsteten Vorrichtung keine Beschädigung der selektiven Membranschicht zu erwarten ist.

Die Vergrößerung der Nichtbeschädigungswahrscheinlichkeit wird vorteilhafterweise noch dadurch unterstützt, daß die Vorsprungoberfläche im Randbereich abgerundet ist, so daß auch dann, wenn sich die selektive Schicht des Membrankissens geringfügig über den Rand der Vorsprungoberfläche neigt, was durch mechanische Bewegung infolge des Strömens des Strömungsmediums verursacht werden kann und auch alternativ oder zusätzlich durch die Temperatur des Strömungsmediums keine Beschädigung der selektiven Schicht des Membrankissens auch bei diesen Bedingungen zu erwarten ist.

Die Vorsprünge selbst können im Hinblick auf die Oberfläche, die dem Membrankissen zugewandt ist, grundsätzlich verschieden ausgebildet sein. Es hat sich aber als vorteilhaft erwiesen, die Vorsprünge in zur Oberfläche des Abstandselementes orthogonaler Richtung derart auszubilden, daß sie einen im wesentlichen trapezförmigen Querschnitt aufweisen. Das hat den Vorteil, daß dadurch die Strömung des Strömungsmediums um den Vorsprung weitgehend strömungsfrei herumgeführt werden kann und somit dem Strömungsmedium ein so gering wie möglicher Widerstand entgegengesetzt wird.

Die Vorsprungoberfläche kann vorteilhafterweise eine im wesentlichen rechteckförmige Kontur oder auch eine im wesentlichen trapezförmige Kontur aufweisen, wobei die längere Seite des Rechtecks bzw. des Trapezes in Strömungsrichtung des Strömungsmediums ausgerichtet ist und die kleinere Seite des Rechtecks bzw. die kleineren Seiten des Trapezes quer zur Strömungsrichtung ausgerichtet sind.

Problematisch bei dem bekannten Abstandselement hat sich die verteilung der Vorsprünge auf der Oberfläche bzw. den Oberflächen des bekannten Abstandselements herausgestellt. Bei dem bekannten Abstandselement sind die Vorsprünge zwar in einer gewissen Ordnung bzw. in einem gewissen Schema auf den Oberflächen des Abstandselements angeordnet, diese Verteilung bzw. dieses Schema ist allerdings so gewählt worden, daß eine möglichst lineare Strömungsbahn des Strömungsmediums über die Oberfläche des Abstandselements nicht möglich ist. Vielmehr wird das Strömungsmedium in der Strömungsebene zickzack- bzw. treppenförmig über die Oberfläche geleitet. Dadurch vergrößert sich durch die bisherigen konstruktiven Maßnahmen im Hinblick auf die Anordnung der Vorsprünge auf der Oberfläche des Abstandselementes der hydraulische Widerstand, der dem Strömungsmedium entgegengesetzt wird, was nachteilig ist, zumal dadurch die Effektivität der angestrebten Trennung des Strömungsmediums nicht erhöht wird. Um diesen Nachteil zu beheben, sind die Vorsprünge gemäß einer weiteren vorteilhaften Ausgestaltung des Abstandselementes auf der Oberfläche in Form eines strahlenförmigen Rasters, ausgehend vom Lochzentrum des zentralen Loches, angeordnet, so daß das Strömungsmedium zwischen den Strahlen, in denen kein Vorsprung vorhanden ist, widerstandsfrei hindurchfließen kann, ohne zickzackförmig oder treppenförmig umgelenkt zu werden.

Die Vorsprünge selbst sind auf der Oberfläche vorzugsweise auf Rasterpunkten einer Mehrzahl unterschiedlicher Kreise mit unterschiedlichen Radien, ausgehend vom Lochzentrum des zentralen Loches aus, angeordnet, wodurch sichergestellt wird, daß die Abstände von einem Vorsprung zu den benachbarten Vorsprüngen, jedenfalls in Strömungsrichtung des Strömungsmediums über die Oberflächen des Abstandselements, gleich ist, so daß auf diese Weise sichergestellt wird, daß das darauf zu liegen kommende Membrankissen weitgehend gleichmäßig durch die Vorsprünge abgestützt wird.

Bei einer weiteren vorteilhaften Ausführungsform des Abstandselementes sind die Punkte jeweils benachbarter Kreise, auf denen die Vorsprünge lokalisiert sind, jeweils versetzt zueinander angeordnet, wodurch dem Bedürfnis noch besser Rechnung getragen werden kann, daß eine sichere Abstützung des Membrankissens auch bei einer so geringen Anzahl wie möglich an Vorsprüngen auf der Oberfläche des Abstandselementes erreicht wird.

Die Anzahl der Vorsprünge auf der einen Oberfläche ist gegenüber der Anzahl auf der anderen Oberfläche kann verschieden gewählt werden, wodurch dem Umstand Rechnung getragen werden kann, daß die Drücke des Strömungsmediums auf der einen Seite der Oberfläche gegenüber der anderen Seite der Oberfläche infolge der Umlenkung und Umkehrung der Strömungsrichtung des Strömungsmediums verschieden sind.

Gemäß einer noch anderen vorteilhaften Ausgestaltung der Erfindung ist um das zentrale Loch herum eine Mehrzahl von zueinander beabstandeten Öffnungen vorgesehen, durch die das strömungsmedium hindurchtritt. Dadurch wird erreicht, daß der Fluß des Strömungsmediums sowohl in die eine Richtung als auch in die andere Richtung weitgehend nach der Umlenkung nach Durchtritt durch die Öffnungen, weitgehend ungehindert erfolgen kann, wobei die Öffnungen, die beide Oberflächen des Abstandselements im Bereich des zentralen Loches miteinander verbinden, als Senken für das Strömungsmedium gelten und auf der anderen Seite als Quellen des Strömungsmediums, von denen aus die nächste Oberfläche wiederum überströmt wird.

Vorteilhaft ist es auch, daß Abstandselement derart weiterzubilden, indem jeweils zwischen zwei voneinander beabstandeten Öffnungen ein von den beiden Oberflächen des Abstandselementes jeweils hervorstehender Steg angeordnet ist, womit sichergestellt wird, daß sich beim Abstandselement unmittelbar im Bereich der Öffnungen durch das Filterelement die Öffnungen nicht ventilartig durch den sich im Membrankissen selbst aufbauenden Innendruck aufgrund des dann abfließenden Permeats zusetzen. Dadurch wird das Membrankissen gerade in diesen kritischen Bereich von den Öffnungen freigehalten.

Auf der im wesentlichen parallel zu den Oberflächen des Abstandselementes ausgebildeten Oberfläche der Stege ist jeweils wenigstens ein erhaben von dieser wegstehender Vorsprung vorgesehen, der im wesentlichen genauso ausgebildet ist wie die Vorsprünge, die unmittelbar auf den Oberflächen des Abstandselementes angeordnet sind.

Das Abstandselement selbst kann bspw. aus jedem beliebigen geeigneten Werkstoff bestehen, der dem Abstandselement bei geringem Gewicht eine hohe Festigkeit gibt.

Vorteilhafterweise besteht das Abstandselement aus Kunststoff, bspw. spritzfähigem Kunststoff, vorzugsweise aus dem Kunststoff Polyoxymethylen POM. Dieser Kunststoff hat den außerordentlich großen Vorteil im Zusammenhang mit der Verwendung für Abstandselemente, da dieser, anders als bisher für diese Zwecke verwendete andere Kunststoffwerkstoff, eine sehr große Temperaturbeständigkeit aufweist und aufgrund seiner gegenüber anderem für diese Zwecke verwendeten Kunststoff eine größere mechanische Festigkeit aufweist, so daß die Dicke des Abstandselementes erheblich reduziert werden kann und die Randbereiche des Abstandselementes ebenfalls leichter bzw. schmaler dimensioniert werden können. Damit ist sowohl eine beträchtliche Gewichts- als auch Kostenersparnis gegenüber bisher bekannten Vorrichtungen mit den bekannten Abstandselementen möglich, wobei in eine Vorrichtung gleicher Größe mit dem derart ausgebildeten erfindungsgemäßen Abstandselement mehr Abstandselemente und somit mehr Membrankissen aufgenommen werden können mit der Folge, daß die aktive Membrantrennfläche der Vorrichtung vergrößert werden kann und die Kosten somit verringert werden können.

Es ist aber auch möglich, das erfindungsgemäße Abstandselement aus bisher dafür verwendeten Kunststoffen wie Polystyrol PS, Acrylnitril-Butadien-Styrol-Copolymere ABS oder Styrol-Acrylnltril-Copolymere SAN vorteilhafterweise herzustellen, wobei sich diese Lösung regelmäßig anbietet, wenn bestehende Vorrichtungen überholt und zumindest teilweise mit neuen Abstandselementen versehen werden sollen. Vorzugsweise ist das Filterelement nach Art eines Membrankissens ausgebildet, das vorteilhafterweise wenigstens auf einer Seite ein Membranelement aufweist, das die eigentliche stoffselektive Schicht bildet. Durch dieses Membranelement kann der Zielstoff, im vorliegenden Fall Wasser, permeieren, und wird im Inneren des Membrankissens zwischen den beiden äußeren Schichten gesammelt und fließt zu einem im Membrankissen ausgebildeten Permeatabflußloch. Um die Membranfläche eines Membrankissens allerdings vollständig zu nutzen, ist es äußerst vorteilhaft, daß das Membrankissen auf beiden Seiten ein Membranelement aufweist. Bei dieser Ausgestaltung des Membrankissens ist es vorteilhafterweise möglich, das eine Membranelement gegenüber dem anderen Membranelement mit unterschiedlichen stoffselektiven Eigenschaften auszubilden, so daß gezielt auf den Fluß des Zielmediums oder auch des aus dem Strömungsmedium durch Permeation durch die Membranelemente hindurch gezielt Einfluß ausgeübt werden kann.

Bei Vorrichtungen, die bisher mit dem gattungsgemäßen Abstandselement ausgerüstet wurden, sind bisher Membrankissen verwendet worden, die eine achteckige äußere Kontur aufwiesen, was regelmäßig damit zu tun hatte, daß die Membranelemente mit der stoffselektiven Schicht und ggf. einer oder mehrerer Zwischenschicht bzw. Zwischenschichten mittels Ultraschallschweißeinrichtungen die Ausbildung der besagten Membrankissen mit anderen Konturen nicht zuließen. Dadurch war in einer mit derart ausgestalteten Membrankissen bestückte Vorrichtung nicht so bestückt, wie es die im wesentlichen kreisförmigen Abstandselemente an sich zuließen. Bestimmte Bereiche des Abstandselementes waren somit nicht mit dem Membrankissen abgedeckt.

Erfindungsgemäß wird ein Membrankissen für die erfindungsgemäBen Abstandselemente vorgeschlagen, bei denen vorteilhafterweise das Membrankissen eine im wesentlichen kreisförmige Kontur aufweist, so daß dadurch eine beträchtliche Erhöhung der Membranfläche pro Abstandselement erreicht wird, ohne daß die Vorrichtung und das Abstandselement geändert zu werden brauchen und auch eine nachträgliche Bestückung schon bestehender Vorrichtungen ohne weitere Umbaumaßnahmen möglich ist. Dadurch kann eine Vorrichtung zum Trennen von Strömungsmedien effektiver genutzt werden, was ebenfalls zur Verminderung auch der Kosten des Betriebes einer derartigen Vorrichtung führt.

Die Erfindung wird nun unter Bezugnahme auf die nachfolgenden schematischen Zeichnungen anhand eines Ausführungsbeispieles im einzelnen beschrieben. Darin zeigen:
- Fig. 1: im Schnitt eine Vorrichtung zum Filtern und Trennen eines Strömungsmediums, in der eine Mehrzahl von Abstandselementen und Filterelementen einen Filterelementenstapel bilden,
- Fig. 2: ein Abstandselement in der Draufsicht,
- Fig. 3: ein Abstandselement in der Draufsicht, jedoch im wesentlichen halb weggeschnitten, die andere Seite des Abstandselements von Fig. 2 zeigend,
- Fig. 4: in der Draufsicht in den zentralen Lochbereich gemäß den Abstandselementen der Fig. 2 und 3 in vergrößerter Darstellung in der Draufsicht,
- Fig. 5: in der Seitenansicht in vergrößerter Darstellung ein Abstandselement gemäß den Fig. 2 bis 4,
- Fig. 6: eine Detail E von Fig. 5 in vergrößerter Darstellung im Ausschnitt und im Schnitt,
- Fig. 7: eine Draufsicht auf die Oberfläche einer Anzahl von Vorsprüngen in Form eines Ausschnittes aus dem Abstandselement und
- Fig. 8: in der Seitenansicht im Ausschnitt und im Schnitt ein Abstandselement gemäß Fig. 7.

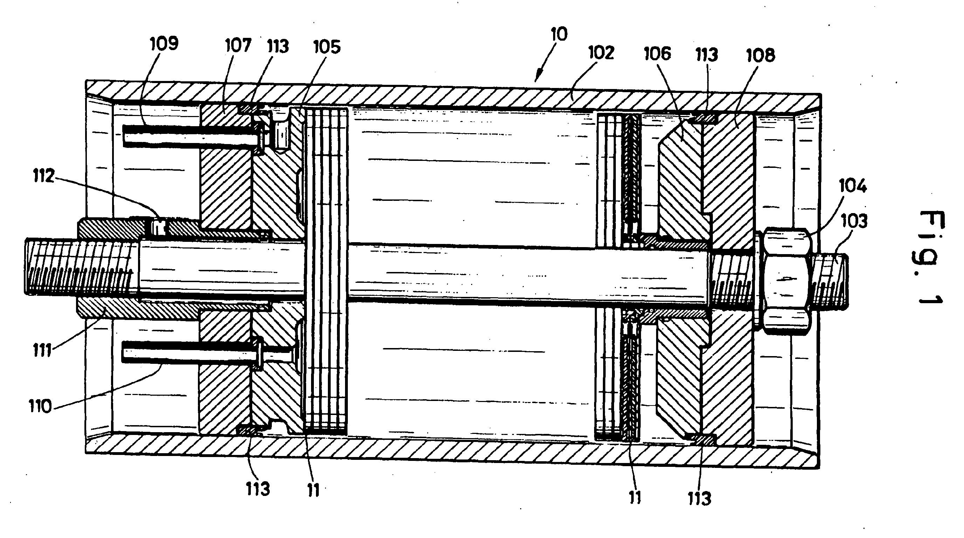

Eine Vorrichtung 10 zum Filtern und Trennen von Strömungsmedien 15 durch Umkehrosmose und Ultrafiltration ist bspw. in Fig. 1 dargestellt, wobei in dieser Vorrichtung 10 eine Mehrzahl von als Membrankissen ausgebildeten Filterelementen 13 und Abstandselementen 11 zusammengestapelt einen Filterelementenstapel vorbestimmter Länge bilden.

Es sei vorangestellt, daß hier die Vorrichtung 10 gemäß Fig. 1 nur beispielhaft beschrieben und skizziert ist. Es sind auch andere konstruktive Ausgestaltungen der Vorrichtung 10 möglich als die, die hier dargestellt ist. Die Abstandselemente 11 gemäß der Erfindung können somit auch grundsätzlich in konstruktiv anders aufgebauten Vorrichtungen 10 eingesetzt werden.

Gleichwohl wird zum besseren Verständnis des Aufbaus des Abstandselementes 11 im Zusammenwirken mit einem Filterelement 13 in Form eines Membrankissens die Vorrichtung 10 kurz erläutert.

Die Vorrichtung 10 weist im wesentlichen ein rohrförmiges Gehäuse 102 auf. In das Gehäuse 102 sind abwechselnd Abstandselemente 11 und Filterelemente 13 eingesetzt, d.h. zwischen jedem Abstandselement 11 liegt ein Filterelement 13. Lediglich an beiden Enden des so gebildeten Filterelementenstapels weist das Abstandselement 11 kein Filterelement 11 auf. Am anschlußseitigen Ende des Filterelementenstapels ist eine Anschlußscheibe 105 vorgesehen, am entgegengesetzten Ende des Filterelementenstapels eine Endscheibe 106. Auf die Anschlußscheibe 105 ist ein äußerer Anschlußflansch 107 aufgesetzt, während auf der Endscheibe 108 ein äußerer Endflansch 108 aufgesetzt ist. Der Filterelementenstapel und die übrigen vorgenannten Elemente werden durch einen zentralen Spannbolzen 103 zusammengehalten, der durch entsprechende zentrale Löcher dieser Elemente hindurchgeht, wobei beiderseits Muttern 104 und 111 auf entsprechenden beiderseitigen Gewindeansätzen des zentralen Spannbolzens 103 die Einheit im Inneren des Gehäuses 102 zusammenhalten. Durch den Anschlußflansch 107 und die Endscheibe 106 gehen ein Zulauf 109 für die Zufuhr von Strömungsmedium 15 und ein Ablauf 110 für das austretende Strömungsmedium hindurch.

Ein durch den Zulauf 109 eintretendes Strömungsmedium 15 tritt in den Innenraum des Gehäuses 112 ein und zwar in den Spalt zwischen dem Filterelementenstapel und der Innenwandung des Gehäuses 102. Das Strömungsmedium 15 gelangt in diesem Spalt in den Raum, der zwischen der Endscheibe 106 und dem daran angrenzenden Abstandselement 11 gebildet wird. Das Strömungsmedium 15 tritt durch die Öffnungen 14 im Abstandselement 11 ein und fließt längs der inneren Oberfläche 119 des Abstandselementes 11 und wird von dort im Bereich des Randes um ein zwischen dem Anschlußelement 11 und dem benachbarten Anschlußelement 11 eingelegtes Filterelement 13 umgelenkt und läuft wieder zurück in Richtung des Zentrums, um erneut durch die Öffnung 14 des zweiten Abstandselements 11 hindurchzufließen. Von dort an wiederholt sich die Umlenkung des Flusses des Strömungsmediums 15 in gleicher Weise bei den jeweils angrenzenden Abstandselementen 11 des gesamten Filterelementenstapels. Aus dem zentralen Permeatabflußloch bzw. den zur Permeatabflußrinne gerichteten Stirnseiten des als Membrankissen ausgebildeten Filterelementes 13 tritt das Permeat aus und gelangt längs dem zentralen Spannbolzen 103 fließend aus dem Permeatablauf 112 zur weiteren Verarbeitung nach draußen. Das aufkonzentrierte Strömungsmedium bzw. Retentat 15 gelangt, nachdem es den gesamten Filterelementenstapel quasi neanderförmig durchlaufen hat, in einen ringförmigen Sammelbereich, der in der Anschlußscheibe 105 ausgebildet ist, und von dort über den Ablauf 110 nach draußen. Der Filtereiementenstapel wird über geeignete Dichtungen 113 im Inneren des Gehäuses gehalten.

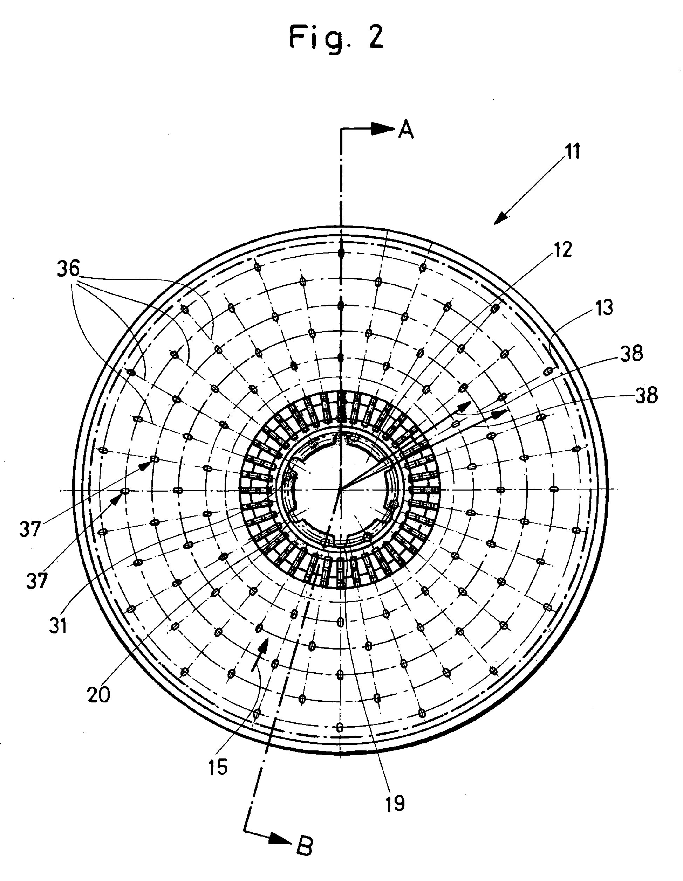

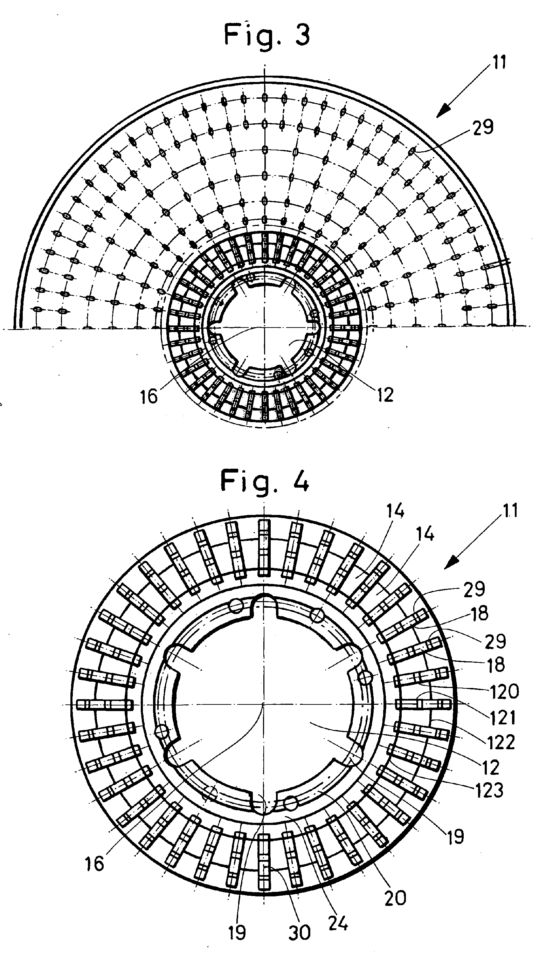

In den Fig. 2 bis 4 sind Draufsichten auf das Abstandselement 11 dargestellt, wobei Fig. 2 eine vollständige Draufsicht auf die eine Seite des Abstandselements darstellt, die Fig. 3 eine Draufsicht in Form eines Ausschnittes auf die andere Seite des Abstandselements und Fig. 3 eine Draufsicht auf den zentralen Bereich des Abstandselements 11 im Ausschnitt unter Weglassung des umgebenden plattenförmigen Teil des Abstandselements 11.

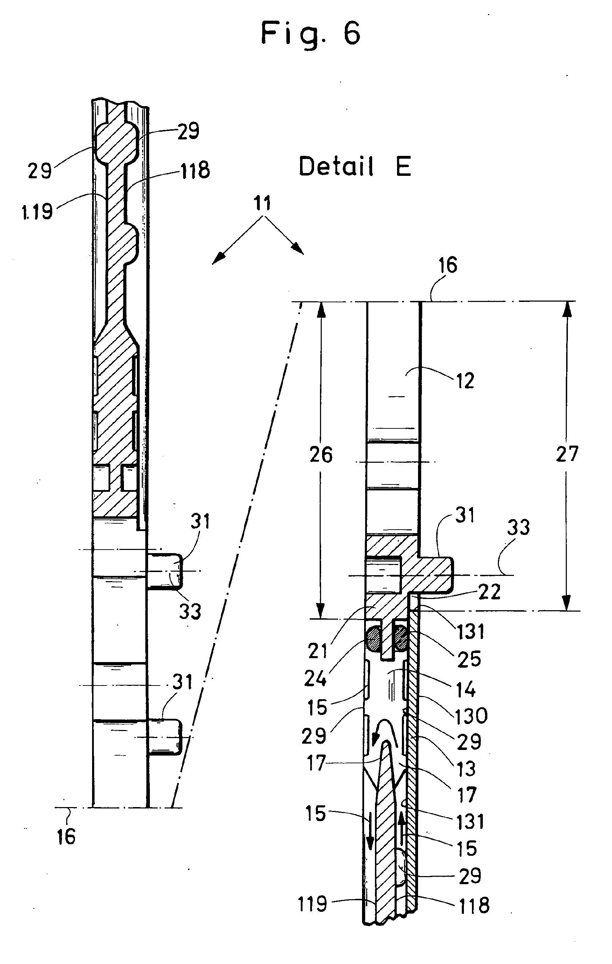

Dieses Abstandselement 11 wird im Zusammenhang mit dem im Zusammenhang mit der Vorrichtung 10 zuvor beschriebenen Filerelementstapel verwendet. Das Abstandselement 11 weist bei dem hier beschriebenen Ausführungsbeispiel einen kreisförmigen Querschnitt auf und ist von zwei scheibenförmigen Oberflächen 118, 119 begrenzt. Eine Achse, die hier durch das Lochzentrum 16 symbolisiert ist, ist die Achse eines zentralen Loches 12. Um das zentrale Loch 12 herum weist das Abstandselement eine Mehrzahl von zueinander beabstandeten Öffnungen 14 auf, durch die das Strömungsmedium 15 hindurchtritt, vergleiche auch Fig. 6, was im einzelnen noch weiter unten beschrieben wird. Bei der hier beschriebenen Ausführungsform sind die Öffnungen 14 auf einem bestimmten gedachten Kreis liegend im wesentlichen in gleichem Abstand zum Lochzentrum 16 um dieses herum angeordnet.

Die Öffnungen 14 sind schlitzförmig ausgebildet und weisen im Querschnitt eine trapezförmige Struktur auf. Die Längsseiten 120. 121 der schlitzförmigen Öffnungen 14 sind länger als die Querseiten 122, 123. In einem in radialer Richtung unmittelbar an die Öffnung 14 angrenzenden Bereich und auf das Loch 12 zuweisend verjüngt sich die Dicke des Abstandselementes 11 in Richtung auf das zentrale Loch 12 zu, vergleiche Bezugsziffer 17 in Fig. 6. Die unmittelbare Spitze der Verjüngung 17 kann im Querschnitt eine abgerundete Form aufweisen.

Zwischen den voneinander beabstandeten Öffnungen 14 befindet sich ein Steg 18, der im wesentlichen von den Oberflächen 118, 119 orthogonal hervorsteht. Das zentrale Loch 12 ist in seinem Randbereich mit einer Mehrzahl von Permeatabflußlöchern 19 versehen. Die Permeatabflußlöcher 19 ragen in eine um das Lochzentrum in einem vorbestimmten Abstand herum angeordnete Permeatabflußrinne 20 hinein, vergleiche insbesondere Fig. 4. Die Permeatabflußrinne 20 wird dabei durch einen Ansatz 21, vergleiche Fig. 6, begrenzt, der Teil des Abstandselementes 11 selbst ist. Der Ansatz 21 ist an der einen Oberfläche 118 von dieser wegstehend ausgebildet.

Um das zentrale Loch 12 herum ist an beiden Oberflächen 118, 119 eine umlaufende nutartige Vertiefung 22, 23 angeordnet, vergleiche insbesondere auch Fig. 6, die zur Aufnahme von Dichtungsringen 24, 25, die bspw. 0-Ringe sein können, dient. Diese Dichtungen 24, 25 sind in Fig. 6 in Haftsitz in den nutartigen Vertiefungen 22, 23 eingesetzt dargestellt. Der radiale Abstand 26 der Vertiefungen 22 vom Lochzentrum 16 ist größer als der radiale Abstand 27 zwischen dem Lochzentrum 17 und dem Innenrand eines zentralen Permeatabflußloches des in Form eines Membrankissens ausgebildeten Filterelements 13.

Das Filterelement 13 in Form eines Membrankissens weist hier eine kreisförmige äußere Randbegrenzung auf, es ist aber auch möglich, die Randbegrenzung in Form eines beliebig zahligen Vieleckes auszubilden. Das Filterelement 13 in Form des Membrankissens ist auf alle Fälle eine Scheibe und hat eine solche äußere Kontur, daß sie auf eine Oberfläche 118. 119 des Abstandselements 11 gelegt werden kann, ohne den Bereich, zu seinem Rand 34, 35, der das Abstandselement außen begrenzt, dichtend abzuschließen. Dadurch kann, wie schon erwähnt, das Strömungsmedium 15 nach dem Längsströmen an dem Filterelement 13 umgelenkt werden um unter dem Filterelement 13 an der Oberfläche 18 längsströmend in die Öffnung 14 zum Durchtritt durch das Abstandselement 11 zu gelangen. Das Filterelement 13 ist in Fig. 2 durch eine strichpunktiert dargestellte Linie gezeigt. Das Filterelement 13 liegt mit seinem zentralen Permeatabflußloch 20 axial zum Lochzentrum 16 des Abstandselements 11 auf diesem auf, vergleiche auch die Fig. 2 und 6.

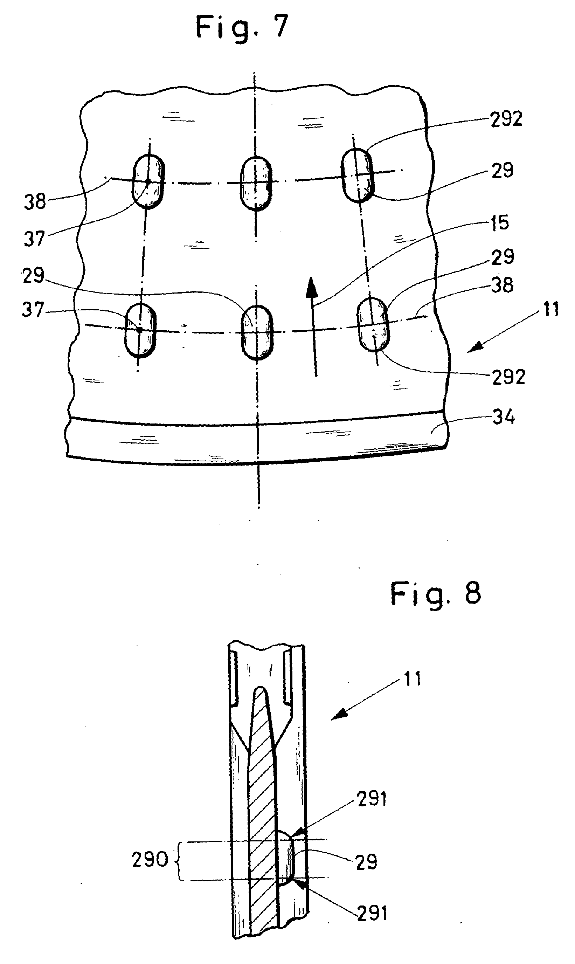

Auf beiden Oberflächen 118. 119 des Abstandselements 11 ist jeweils eine Mehrzahl erhaben von diesen wegstehender Vorsprünge 29 angeordnet. Die Vorsprünge 29 weisen eine im wesentlichen parallel zur jeweiligen Oberfläche 118, 119 ausgerichtete Vorsprungsoberfläche 290 auf, vergleiche insbesondere die vergrößerten Darstellungen gemäß den Fig. 7 und 8. Dabei ist die Vorsprungsoberfläche 290 im wesentlichen eben ausgebildet und ist im Randbereich 291 im wesentlichen um die Vorsprungsoberfläche herum abgerundet ausgebildet. Die Vorsprünge 29 weisen in zur Oberfläche 118, 119 orthogonaler Richtung einen im wesentlichen, ggf. sowohl quer als auch längs zur Fließrichtung des Strömungsmediums 15, trapezförmigen Querschnitt auf, vergleiche Fig. 8. Die Vorsprungsoberfläche 290 ist im wesentlichen rechteckig ausgebildet, kann aber auch an den Schmalseiten 292, vergleiche wiederum Fig. 7, halbkreisförmig oder an diesen Stellen parabelförmig ausgebildet sein, um einen so gering wie möglichen hydraulischen Widerstand im Hinblick auf das darauf zu bzw. von diesem wegströmenden Strömungsmedium 15 auszuüben, vergleiche den mit der Bezugsziffer 15 versehenen Pfeil in den Fig. 2, 6 und 7. Die Vorsprungsoberfläche 290 kann auch eine im wesentlichen trapezförmige Kontur aufweisen (nicht dargestellt).

Auch auf den im wesentlichen parallel zu den Oberflächen 118, 119 ausgebildeten Stegoberflächen 30 sind erhaben von diesen wegstehende Vorsprünge 29, vergleiche Fig. 4, vorgesehen. Die Vorsprünge 29, die von den Stegoberflächen 30 wegstehen, sind jedoch nur so hoch wegstehend ausgebildet, daß sie, bezogen auf die Oberflächen 118, 119 des Abstandselements, genauso hoch sind wie die Vorsprünge 29 auf den Oberflächen 118, 119 selbst. Auf diese Weise ist sichergestellt, daß das Filterelement 13 auf allen Vorsprüngen 29 abgestützt im wesentlichen Plan zu den Oberflächen 118, 119 des Abstandselements 11 aufliegt und somit auch die Dichtungsringe 24, 25 bei genügend großer Vorspannung des Systems mittels des im Zusammenhang mit der Vorrichtung 10 beschriebenen zentralen Spannbolzens 103 dichtend unter geringfügiger Verformung des Querschnitts der Dichtungen 24, 25, vergleiche Fig. 6 berührt.

Wie insbesondere aus den Fig. 2 und 3 sowie in vergrö-Berter Teildarstellung aus Fig. 7 deutlich ersichtlich, sind die Vorsprünge 29 auf den Oberflächen 118, 119 in Form eines strahlenförmigen Rasters 36 angeordnet, das vom Lochzentrum 16 des zentralen Loches 12 als Strahlursprung ausgeht. Die Vorsprünge 29 auf der Oberfläche 118, 119 sind auf Rasterpunkten 37 einer Mehrzahl unterschiedlicher Kreise 38 mit unterschiedlichen Radien 39. ausgehend vom Lochzentrum 16 des zentralen Loches 12, angeordnet. Die Kreise 38, die konzentrisch zum Lochzentrum 16 ausgebildet sein können, können jeweils zum benachbarten Kreis 38 gleich oder unterschiedlich beabstandet sein.

Wie aus einem Vergleich der Fig. 2 und 3 ersichtlich, kann die Anzahl der Vorsprünge 29 auf der einen Oberfläche 118, 119 gegenüber der Anzahl auf der anderen Oberfläche 118, 119 verschieden sein, wobei aber auch pro Filter- bzw. Abstandselementenstapel, wie er in der eingangs beschriebenen Vorrichtung 10 verwendet wird, unterschiedliche Abstandselemente verwendet werden können, die jeweils eine unterschiedliche Anzahl von Vorsprüngen 29 aufweisen, womit bspw. dem Druckabfall zwischen Eingangsdruck des Strömungsmediums 15 am Eingang der Vorrichtung 10 und dem sehr viel geringeren Druck am Ausgang des vom Durchströmungsmedium 15 durchströmten Filter- und Abstandselementenstapel Rechnung getragen werden kann.

Die Punkte 37 jeweils benachbarter Kreise 38, auf denen die Vorsprünge 29 lokalisiert sind, können bspw. auch versetzt zueinander angeordnet sein, wie es aus Fig. 2 ersichtlich ist.

Um den Bereich um das zentrale Loch 12 herum ist auf einer der Außenflächen 118 eine Mehrzahl erhaben von dieser wegstehender stiftartiger Vorsprünge 31 vorgesehen, wobei auf der anderen Oberfläche 119 eine entsprechende Mehrzahl von Vertiefungen 32 vorgesehen ist. Die Vorsprünge 31 eines Abstandselementes 11 und die Vertiefungen 32 haben in bezug auf eine durch sie hindurchgehende gedachte Achse 33, vergleiche Fig. 6, einen gleichen Abstand vom Lochzentrum 18. Die Vorsprünge 31 und die Vertiefungen 32 des Abstandselementes 11 weisen in der Regel eine gleiche Querschnittsform auf, wobei bei dem hier dargestellten Ausführungsbeispiel der Querschnitt kreisförmig ist. Durch die stiftartigen Vorsprünge 31 und die Vertiefungen 32 jeweils auf einer Oberfläche bzw. Seite des Abstandselementes 11 können beliebig große Abstandselementenstapel unter Einschluß jeweiliger Filterelemente 13 in Form von Membrankissen zusammengestellt werden, die hochgenau zueinander ausgerichtet sind.

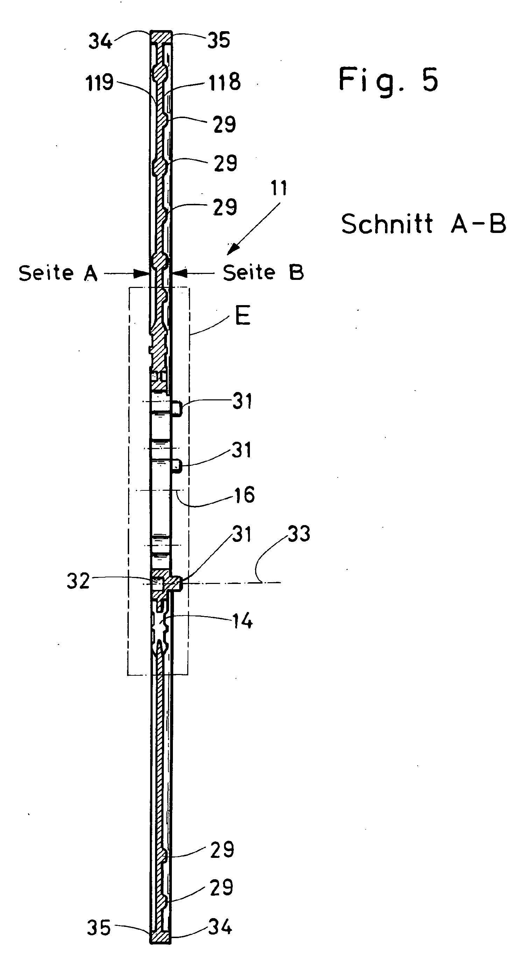

Jedes Abstandselement weist einen äußeren umlaufenden Rand 34, 35 an beiden Oberflächen 118, 119 auf, vergleiche insbesondere auch Fig. 5, wobei einer der Ränder 34 wenigstens um die Dicke des als Membrankissen ausgebildeten Filterelementes 13 in bezug auf die Flächennormale der Oberfläche 118 höher ist, was insbesondere aus den Fig. 6 und 8 ersichtlich ist. In diesen so gebildeten scheibenförmigen Hohlraum wird, wie zuvor schon erwähnt, das Filterelement 13 eingelegt, wobei die eine Oberfläche 130 des Filterelementes 13, die in der Darstellung von Fig. 6 die untere, innere ist, im wesentlichen Plan mit dem Ansatz 21 zu liegen kommt. Mehrere Abstandselemente 11, wenn sie gemäß der Darstellung von Fig. 1 zu einem Abstands- bzw. Filterelementenstapel zusammengefügt sind, schließen jeweils zwischen sich ein Filterelement 13 ein, wobei die eine Oberfläche 113 des Filterelementes 13 auf den Vorsprüngen 29 der einen Oberfläche 118 des Abstandselementes 11 aufliegt, während es mit seiner anderen Oberfläche 130 auf den Vorsprüngen 29 der anderen Oberfläche des benachbarten Abstandselements 11 aufliegt, usw..

Wie eingangs schon beschrieben, fließt das Strömungsmedium 15 mäanderförmig einmal auf der Oberfläche 118 in Richtung auf die Öffnung 14 zu, vergleiche Fig. 2 und 6, wird dort umgelenkt und fließt auf der Oberfläche 119 von den Öffnungen weg - Seite A -, um im Bereich der äu-Beren geschlossenen Begrenzungskanten des als Membrankissen ausgebildeten Filterelementes 13 durch den zwischen dem Rand 34 und des einen Abstandselementes 11 und dem Rand 35 des anderen Abstandselements 11 ausgebildeten Spalt umgelenkt zu werden und in Richtung der Öffnungen 14 - Seite 8 - des benachbarten Abstandselementes 11 zurückzufließen.

Durch die stoffselektive eigentliche Trennschicht des Filterelementes 13 wird das Strömungsmedium 15 von dem zu trennenden, im Strömungsmedium 15 enthaltenem Stoff, bspw. Salz von Seewasser, getrennt, wobei das salzfreie Wasser durch die selektive Trennschicht der Membrankissen permeiert und im Raum zwischen beiden Oberflächen 130, 131 das Permeat, das stirnseitig aus dem Permeatauslaß 131 des Filterelementes 13 in die Permeatabflußrinne 20 austritt und von dort über die Permeatabflußlöcher 19, längs dem Spannbolzen 103, vergleiche Fig. 1, fließend auf geeignete Weise gesammelt aus dem Permeatablauf 112 der Vorrichtung 10 austritt.

Die Abstandselemente 11 lassen sich vorzugsweise aus dem Kunststoff Polyoximethylen POM herstellen, wodurch einerseits eine große Festigkeit des Abstandselements 11 erreicht wird und andererseits eine hohe Temperaturstabilität im Vergleich zu anderen für grundsätzlich ebenfalls heranziehbaren Kunststoffen mit einem sehr viel geringeren Gewicht erreicht wird.

Andere Kunststoffe zur Ausbildung des Abstandselements 11 können bspw. Polystyrol PS Acrylnitril-Butadien-Styrol-Copolymere ABS oder auch Styrol-Acrylnitril-Copolymere SAN sein.

Grundsätzlich sind aber auch die Abstandselemente 11 aus metallischen Werkstoffen oder aus Verbundwerkstoffen, auch bspw. in Form einer Kombination von Metall und Kunststoff, denkbar.

### Bezugszeichenliste

- 10: Vorrichtung
- 102: rohrförmiges Gehäuse.
- 103: zentraler Spannbolzen
- 104: Mutter
- 105: Anschlußflansch
- 106: Endscheibe
- 107: Anschlußendflansch
- 108: Endflansch
- 109: Zulauf
- 110: Ablauf
- 111: Mutter
- 112: Permeatablauf
- 113: Dichtung

- 118: Oberfläche
- 119: Oberfläche
- 11: Abstandselement

- 12: Loch
- 120: Längsseite
- 121: Längsseite
- 122: Querseite
- 123: Querseite
- 13: Filterelement/Membrankissen
- 130: Oberfläche
- 131: Oberfläche

- 133: Permeatauslaß
- 14: Öffnung
- 15: Strömungsmedium
- 16: Lochzentrum
- 17: Verjüngung
- 18: Steg
- 19: Permeatabflußloch
- 20: Permeatabflußrinne
- 21: Ansatz
- 22: Vertiefung
- 23: Vertiefung
- 24: Dichtungsring
- 25: Dichtungsring
- 26: Abstand
- 27: Abstand
- 28: Permeatabflußloch des Membrankissens
- 29: Vorsprung
- 290: Vorsprungoberfläche
- 291: Randbereich Vorsprung-oberfläche
- 292: Schmalseite
- 30: Stegoberfläche
- 31: Vorsprung
- 32: Vertiefung
- 33: Achse
- 34: Rand

- 35: Rand
- 36: strahlenförmiges Raster
- 37: Rasterpunkt
- 38: Kreis
- 39: Kreisradius

## Patentansprüche

1. Abstandselement (11) zur Führung von Strömungsmedien (15), insbesondere bei Vorrichtungen (10) zum Filtern und Trennen von Strömungsmedien (15) durch Umkehrosmose und Ultrafiltration, wobei jeweils zwischen zwei im wesentlichen scheibenförmig ausgebildeten, mit einem zentralen Loch (12) versehenen Abstandselementen (11), die vom Strömungsmedium (15) umflossen werden, ein Filterelement (13) eingeschlossen ist, und wobei das Abstandselement (11) um das zentrale Loch (12) herum mit einer Mehrzahl von zueinander beabstandeten Öffnungen (14) versehen ist, durch die das Strömungsmedium (15) hindurchtritt, und daß auf wenigstens einer Oberfläche (130; 131) des Abstandselementes (11) eine Mehrzahl von erhaben von der Oberfläche (130, 131) wegstehender Vorsprünge (29) vorgesehen ist, **dadurch gekennzeichnet, daß** die Vorsprünge (29) eine im wesentlichen parallel zur Oberfläche (118, 119) ausgerichtete Vorsprungoberfläche (290) aufweisen.

2. Abstandselement nach Anspruch 1, **dadurch gekennzeichnet, daß** die Vorsprungoberfläche (290) im wesentlichen eben ausgebildet ist.

3. Abstandselement nach einem oder beiden der Ansprüche 1 oder 2, **dadurch gekennzeichnet, daß** die Vorsprungsoberfläche (290) im Randbereich (291) abgerundet ist.

4. Abstandselement nach einem oder mehreren der Ansprüche 1 bis 3, **dadurch gekennzeichnet, daß** die Vorsprünge (29) in zur Oberfläche (118, 119) des Abstandselementes (11) orthogonaler Richtung einen im wesentlichen trapezförmigen Querschnitt aufweisen.

5. Abstandselement nach einem oder mehreren der Ansprüche 1 bis 4, **dadurch gekennzeichnet, daß** die Vorsprungoberfläche (290) eine im wesentlichen rechteckförmige Kontur aufweist.

6. Abstandselement nach einem oder mehreren der Ansprüche 1 bis 4, **dadurch gekennzeichnet, daß** die Vorsprungoberfläche (290) eine im wesentlichen trapezförmige Kontur aufweist.

7. Abstandselement nach einem oder mehreren der Ansprüche 1 bis 6, **dadurch gekennzeichnet, daß** die Vorsprünge (29) auf der Oberfläche (130, 131) in Form eines strahlenförmigen Rasters (36), ausgehend vom Lochzentrum (16) des zentralen Loches (12), angeordnet sind.

8. Abstandselement nach Anspruch 7, **dadurch gekennzeichnet, daß** die Vorsprünge (29) auf der Oberfläche (118, 119) auf Rasterpunkten (37) einer Mehrzahl unterschiedlicher Kreise (38) mit' unterschiedlichen Radien (39). ausgehend vom Zentrum (16) des zentralen Loches (12), angeordnet sind.

9. Abstandselement nach Anspruch 8, **dadurch gekennzeichnet, daß** die Punkte (37) jeweils benachbarter Kreise (38), auf denen die Vorsprünge (29) lokalisiert sind, jeweils versetzt zueinander angeordnet sind.

10. Abstandselement nach einem oder mehreren der Ansprüche 1 bis 9, **dadurch gekennzeichnet, daß** die Anzahl der Vorsprünge (29) auf der einen Oberfläche (118; 119) gegenüber der Anzahl auf der anderen Oberfläche (118; 119) verschieden ist.

11. Abstandselement nach einem oder mehreren der Ansprüche 1 bis 10, **dadurch gekennzeichnet, daß** um das zentrale Loch (12) herum eine Mehrzahl zueinander beabstandeten Öffnungen (14) vorgesehen ist, durch die das Strömungsmedium (15) hindurchtritt.

12. Abstandselement nach Anspruch 11, **dadurch gekennzeichnet, daß** jeweils zwischen zwei voneinander beabstandeten Öffnungen (14) ein von beiden Oberflächen (118, 119) des Abstandselementes (11) jeweils hervorstehender Steg (18) angeordnet ist.

13. Abstandselement nach Anspruch 12, **dadurch gekennzeichnet, daß** auf der im wesentlichen parallel zu den Oberflächen (118, 119) ausgebildeten Oberfläche (30) der Stege (18) jeweils wenigstens ein erhaben von dieser wegstehender Vorsprung (29) vorgesehen ist.

14. Abstandselement nach einem oder mehreren der Ansprüche 1 bis 13, **dadurch gekennzeichnet, daß** es aus Kunststoff besteht.

15. Abstandselement nach Anspruch 14, **dadurch gekennzeichnet, daß** der Kunststoff Polyoximethylen POM ist.

16. Abstandselement nach Anspruch 14, **dadurch gekennzeichnet, daß** der Kunststoff Polystyrol PS, Acrylnltril-Butadien-Styrol-Copolymere ABS oder Styrol-Acrylnitril-Copolymere SAN ist.

17. Abstandselement nach einem oder mehreren der Ansprüche 1 bis 16, **dadurch gekennzeichnet, daß** das Filterelement (13) eine im wesentlichen kreisförmige Kontur aufweist.

18. Abstandselement nach einem oder mehreren der Ansprüche 1 bis 17, **dadurch gekennzeichnet, daß** das Filterelement (13) nach Art eines Membrankissens ausgebildet ist.

19. Abstandselement nach Anspruch 18, **dadurch gekennzeichnet, daß** das Membrankissen wenigstens an einer Seite ein Membranelement aufweist.

20. Abstandselement nach Anspruch 18, **dadurch gekennzeichnet, daß** das Membrankissen auf beiden Seiten ein Membranelement aufweist, wobei das eine Membranelement gegenüber dem anderen Membranelement eine unterschiedliche Stoffselektivität aufweist.

## Geänderte Patentansprüche

### Geänderte Patentansprüche gemäss Regel 86(2) EPÜ.

**1.** (gemäß Hauptantrag) Abstandselement (11) zur Führung von Strömungsmedien (15), insbesondere bei Vorrichtungen (10) zum Filtern und Trennen von Strömungsmedien (15) durch Umkehrosmose und Ultrafiltration, wobei jeweils zwischen zwei im wesentlichen scheibenförmig ausgebildeten, mit einem zentralen Loch (12) versehenen Abstandselementen (11), die vom Strömungsmedium (15) umflossen werden, ein Filterelement (13) eingeschlossen ist, und wobei das Abstandselement (11) um das zentrale Loch (12) herum mit einer Mehrzahl von zueinander beabstandeten Öffnungen (14) versehen ist, durch die das Strömungsmedium (15) hindurchtritt, und daß auf wenigstens einer Oberfläche (118; 119) des Abstandselementes (11) eine Mehrzahl von erhaben von der Oberfläche (118; 119) wegstehender Vorsprünge (29) vorgesehen ist, **dadurch gekennzeichnet, daß** die Vorsprünge (29) eine im wesentlichen parallel zur Oberfläche (118; 119) ausgerichtete Vorsprungoberfläche (290) aufweisen.

**1.** (gemäß Hilfsantrag) Abstandselement (11) zur Führung von Strömungsmedien (15), insbesondere bei Vorrichtungen (10) zum Filtern und Trennen von Strömungsmedien (15) durch Umkehrosmose und Ultrafiltration, wobei jeweils zwischen zwei im wesentlichen scheibenförmig ausgebildeten, mit einem zentralen Loch (12) versehenen Abstandselementen (11), die vom Strömungsmedium (15) umflossen werden, ein Filterelement (13) eingeschlossen ist, und wobei das Abstandselement (11) um das zentrale Loch (12) herum mit einer Mehrzahl von zueinander beabstandeten Öffnungen (14) versehen ist, durch die das Strömungsmedium (15) hindurchtritt, und daß auf wenigstens einer Oberfläche (118; 119) des Abstandselementes (11) eine Mehrzahl von erhaben von der Oberfläche (118; 119) wegstehender Vorsprünge (29) vorgesehen ist, **dadurch gekennzeichnet, daß** die Vorsprünge (29) eine im wesentlichen parallel zur Oberfläche (118; 119) ausgerichtete Vorsprungoberfläche (290) aufweisen, wobei das Filterelement (13) flächig auf den Oberflächen (118; 119) aufliegt.
